# EUROPEAN PATENT SPECIFICATION

(11) **EP 3 739 844 B1**
(45) Date of publication and mention of the grant of the patent: **04.08.2021**
(21) Application number: 18900120.9
(22) Date of filing: 15.06.2018
(51) Int. Cl.: H04L 29/08, H04L 12/28, H04W 4/20, G08C 17/02

(54) **DATA TRANSMISSION METHOD AND DEVICE**
DATENÜBERTRAGUNGSVERFAHREN UND -VORRICHTUNG
PROCÉDÉ ET DISPOSITIF DE TRANSMISSION DE DONNÉES

(30) Priority: 12.01.2018 WO PCT/CN2018/072408
(43) Date of publication of application: 18.11.2020
(73) Proprietor: GUANGDONG OPPO MOBILE TELECOMMUNICATIONS CORP., LTD., Wusha, Chang'an Dongguan, Guangdong 523860 (CN)
(72) Inventor: LIU, Jianhua, Dongguan, Guangdong 523860 (CN)
(74) Representative: Novagraaf Technologies
(86) International application number: PCT/CN2018/091599
(87) International publication number: WO 2019/136927

(56) References cited:
- WO-A1-2014/088120
- WO-A1-2017/140387
- CN-A- 103 024 008
- CN-A- 106 100 800
- CN-A- 106 330 398
- US-A1- 2012 231 828

## Description

### TECHNICAL FIELD

Embodiments of the present disclosure generally relate to wireless communication technologies, and more particularly, to a data transmission method and device and a computer storage medium.

### BACKGROUND

In the future networks, there will be a large number of Internet of Things (IoT) devices. In existing protocols, IoT devices, such as wearable devices or smart home devices, are usually connected to the owner's smart phone. This connection can be realized through the direct interface between the IoT devices and the smart phone, such as through the sidelink interface. When the network needs to send messages to a group of terminals (such as wearable devices + smart phones), according to the current method, data will be sent to each terminal, resulting in serious waste of resources.

PCT publication WO2017/140387 discloses that an MME throttles (or otherwise controls) the amount or frequency of UL data that a UE transmits in the control plane, such as by communicating to the UE rate control information (e.g., a throttling factor or throttling delay). For instance, the MME may throttle NAS messages with user data (i.e., NAS Data PDUs) sent using control plane CIoT EPS optimization by adding a throttling factor and/or a throttling delay in a NAS message sent to the UE.

PCT publication WO2014088120 discloses that an SCS (60) sends out a trigger message for activating a group of MTC devices (10_1 to 10_n) through a network. An HSS verifies whether or not to transfer the trigger message to the given MTC devices based on subscription information of the group. A group GW broadcasts the trigger message. Further, An MME concatenates DL (downlink) messages addressed to the MTC devices (10_1 to 10_n). The group GW distributes, to the MTC devices, the DL messages included in the concatenated message. Furthermore, the group GW concatenates UL (uplink) messages received from the MTC devices (10_1 to 10_n). The MME processes the UL messages included in the
concatenated message.

### SUMMARY

The present invention defines a data transmission method according to claim 1 and a data transmission device according to claim 8. Further embodiments are set forth in the dependent claims 2-7.

An embodiment of the present disclosure provides a data transmission method, including:
receiving, by a core network element, data sent from an external network, wherein the data is data sent to a first device group; and
sending, by the core network element, the data to an access network element via a first transmission resource, so that the access network element sends the data to a terminal in the first device group via a second transmission resource;
wherein the data is transmitted on a control plane among the core network element, the access network element and the terminal;
wherein sending, by the core network element, the data to an access network element via a first transmission resource, comprises:
if there is a dedicated transmission resource for the first device group between the core network element and the access network element, sending, by the core network element, the data to the access network element via the dedicated transmission resource;
if there is no dedicated transmission resource for the first device group between the core network element and the access network element, establishing, by the core network element, the dedicated transmission resource for the first device group between the core network element and the access network element; and
sending, by the core network element, the data to the access network element via the dedicated transmission resource;
wherein establishing, by the core network element, the dedicated transmission resource for the first device group between the core network element and the access network element, comprises:
establishing, by the core network element, the dedicated transmission resource for the first device group between the core network element and the access network element based on the group information of the first device group.

According to some embodiments of the present disclosure, when the first transmission resource and/or the second transmission resource are dedicated transmission resources for the first device group, a resource attribute of the first transmission resource and/or the second transmission resource indicates that a device group corresponding to the data is the first device group.

the first transmission resource and/or the second transmission resource have at least one of the following resource attributes: physical layer identification, logical channel, bearer, Quality of Service (QoS) flow, Protocol Data Unit (PDU) session, IP tunnel, or GPRS Tunneling Protocol (GTP) tunnel.

According to some embodiments of the present disclosure, when the first transmission resource and/or the second transmission resource are common transmission resources, group identification information of the first device group is carried when the data is transmitted to indicate that a device group corresponding to the data is the first device group, or identification information of the terminal in the first device group and/or PDU session information of the terminal and/or QoS information of the terminal is carried when the data is transmitted to indicate that a device group corresponding to the data is the first device group.

According to some embodiments of the present disclosure, indicating that a device group corresponding to the data is the first device group by carrying group identification information of the first device group when transmitting the data, includes
encapsulating, by the core network element, the group identification information of the first device group in a PDU of a target protocol layer corresponding to the terminal, wherein the PDU includes the data.

According to some embodiments of the present disclosure, indicating that a device group corresponding to the data is the first device group by carrying identification information of the terminal in the first device group and/or PDU session information of the terminal and/or QoS information of the terminal when transmitting the data, includes:
encapsulating, by the core network element, the identification information of the terminal in the first device group and/or the PDU session information of the terminal and/or the QoS information of the terminal in a PDU of a target protocol layer corresponding to the terminal, wherein the PDU includes the data.

According to some embodiments of the present disclosure, the target protocol layer is: NAS layer, or AS layer.

According to some embodiments of the present disclosure, receiving, by a core network element, data sent from an external network, includes:
receiving via a third transmission resource, by the core network element, data sent from the external network, wherein the third transmission resource is a dedicated transmission resource for the first device group.

According to some embodiments of the present disclosure, the data sent from the external network carries:
group identification information of the first device group; or
identification information of the terminal in the first device group and/or PDU session information of the terminal and/or QoS information of the terminal.

According to some embodiments of the present disclosure, a resource attribute of the third transmission resource is used to indicate that the device group corresponding to the data is the first device group; or,
the group identification information of the first device group carried in the data is used to indicate that the device group corresponding to the data is the first device group, or, identification information of the terminal in the first device group and/or the PDU session information of the terminal and/or the QoS information of the terminal carried in the data is used to indicate that the device group corresponding to the data is the first device group.

According to some embodiments of the present disclosure, sending, by the core network element, the data to an access network element via a first transmission resource, includes:
if there is a dedicated transmission resource for the first device group between the core network element and the access network element, sending, by the core network element, the data to the access network element via the dedicated transmission resource.

According to some embodiments of the present disclosure, sending, by the core network element, the data to an access network element via a first transmission resource, includes:
if there is no dedicated transmission resource for the first device group between the core network element and the access network element, establishing, by the core network element, the dedicated transmission resource for the first device group between the core network element and the access network element; and
sending, by the core network element, the data to the access network element via the dedicated transmission resource.

According to some embodiments of the present disclosure, establishing, by the core network element, the dedicated transmission resource for the first device group between the core network element and the access network element, includes:
establishing, by the core network element, the dedicated transmission resource for the first device group between the core network element and the access network element based on the group information of the first device group.

According to some embodiments of the present disclosure, the group information of the first device group includes at least one of PDU session information, QoS flow information, QoS information, core network address information, group identification information, IP tunnel, or GTP tunnel.

According to some embodiments of the present disclosure, sending, by the core network element, the data to an access network element via a first transmission resource includes:
if there is a common transmission resource between the core network element and the access network element, sending, by the core network element, the data to the access network element via the common transmission resource, wherein the data carries group identification information of the first device group, the data carries identification information of the terminal in the first device group and/or PDU session information of the terminal and/or QoS information of the terminal.

According to some embodiments of the present disclosure, if there is no dedicated transmission resource for the first device group between the core network element and the access network element, and there is a common transmission resource, the core network element sends the data to the access network element via the common transmission resource.

An embodiment of the present disclosure provides a data transmission method, including:
receiving via a first transmission resource, by an access network element, data sent from a core network element, wherein the data is data sent to a first device group; and
sending, by the access network element, the data to a terminal in the first device group via a second transmission resource;
wherein the data is transmitted on a control plane among the core network element, the access network element and the terminal.

According to some embodiments of the present disclosure, when the first transmission resource and/or the second transmission resource are dedicated transmission resources for the first device group, a resource attribute of the first transmission resource and/or the second transmission resource indicates that a device group corresponding to the data is the first device group.

According to some embodiments of the present disclosure, the first transmission resource and/or the second transmission resource have at least one of the following resource attributes: physical layer identification, logical channel, bearer, QoS flow, PDU session, IP tunnel, or GTP tunnel.

According to some embodiments of the present disclosure, when the first transmission resource and/or the second transmission resource are common transmission resources, group identification information of the first device group is carried when the data is transmitted to indicate that a device group corresponding to the data is the first device group, or identification information of the terminal in the first device group and/or Protocol Data Unit (PDU) session information of the terminal and/or Quality of Service (QoS) information of the terminal is carried when the data is transmitted to indicate that a device group corresponding to the data is the first device group.

According to some embodiments of the present disclosure, sending, by the access network element, the data to a terminal in the first device group via a second transmission resource, includes:
if there is a dedicated transmission resource for the first device group between the access network element and the terminal, sending, by the access network element, the data to the terminal in the first device group via the dedicated transmission resource.

According to some embodiments of the present disclosure, sending, by the access network element, the data to a terminal in the first device group via a second transmission resource includes:
if there is a common transmission resource between the access network element and the terminal, sending, by the access network element, the data to the terminal in the first device group via the common transmission resource, wherein the data carries group identification information of the first device group, or the data carries identification information of the terminal in the first device group and/or Protocol Data Unit (PDU) session information of the terminal and/or Quality of Service (QoS) information of the terminal.

An embodiment of the present disclosure provides a data transmission method, including:
receiving via a second transmission resource, by a terminal, data sent from an access network element, wherein the data is data sent to a first device group; and
recognizing, by the terminal, that a device group corresponding to the data is the first device group;
wherein the data is transmitted on a control plane between the access network element and the terminal.

According to some embodiments of the present disclosure, recognizing, by the terminal, that a device group corresponding to the data is the first device group includes:
when the second transmission resource is a dedicated transmission resource, recognizing, by the terminal, that the device group corresponding to the data is the first device group based on a resource attribute of the second transmission resource.

According to some embodiments of the present disclosure, the second transmission resource has at least one of the following resource attributes: physical layer identification, logical channel, bearer, Quality of Service (QoS) flow, Protocol Data Unit (PDU) session, IP tunnel, or GPRS Tunneling Protocol (GTP) tunnel.

According to some embodiments of the present disclosure, recognizing, by the terminal, that a device group corresponding to the data is the first device group includes:
if the second transmission resource is a common transmission resource, recognizing, by the terminal, that the device group corresponding to the data is the first device group based on group identification information of the first device group carried in the data, or recognizing, by the terminal, that the device group corresponding to the data is the first device group based on identification information of the terminal in the first device group and/or Protocol Data Unit (PDU) session information of the terminal and/or Quality of Service (QoS) information of the terminal carried in the data.

An embodiment of the present disclosure provides a data transmission device, applied in a core network element, the device including:
a receiving unit configured to receive data sent from an external network, wherein the data is data sent to a first device group; and
a sending unit configured to send the data to an access network element via a first transmission resource, so that the access network element sends the data to a terminal in the first device group via a second transmission resource;
wherein the data is transmitted on a control plane among the core network element, the access network element and the terminal.

According to some embodiments of the present disclosure, when the first transmission resource and/or the second transmission resource are dedicated transmission resources for the first device group, a resource attribute of the first transmission resource and/or the second transmission resource indicates that a device group corresponding to the data is the first device group.

According to some embodiments of the present disclosure, the first transmission resource and/or the second transmission resource have at least one of the following resource attributes: physical layer identification, logical channel, bearer, QoS flow, PDU session, IP tunnel, or GTP tunnel.

According to some embodiments of the present disclosure, when the first transmission resource and/or the second transmission resource are common transmission resources, group identification information of the first device group is carried when the data is transmitted to indicate that a device group corresponding to the data is the first device group, or identification information of the terminal in the first device group and/or Protocol Data Unit (PDU) session information of the terminal and/or Quality of Service (QoS) information of the terminal is carried when the data is transmitted to indicate that a device group corresponding to the data is the first device group.

According to some embodiments of the present disclosure, the device further includes:
an encapsulation unit configured to encapsulate the group identification information of the first device group in a PDU of a target protocol layer corresponding to the terminal, wherein the PDU includes the data.

According to some embodiments of the present disclosure, the device further includes:
an encapsulation unit configured to encapsulate the identification information of the terminal in the first device group and/or the PDU session information of the terminal and/or the QoS information of the terminal in a PDU of a target protocol layer corresponding to the terminal, wherein the PDU includes the data.

According to some embodiments of the present disclosure, the target protocol layer is: NAS layer, or AS layer.

According to some embodiments of the present disclosure, the receiving unit is configured to:
receive via a third transmission resource data sent from the external network, wherein the third transmission resource is a dedicated transmission resource for the first device group.

According to some embodiments of the present disclosure, the data sent from the external network carries:
group identification information of the first device group; or
identification information of the terminal in the first device group and/or PDU session information of the terminal and/or QoS information of the terminal.

According to some embodiments of the present disclosure, a resource attribute of the third transmission resource is used to indicate that the device group corresponding to the data is the first device group; or,
the group identification information of the first device group carried in the data is used to indicate that the device group corresponding to the data is the first device group, or, identification information of the terminal in the first device group and/or the PDU session information of the terminal and/or the QoS information of the terminal carried in the data is used to indicate that the device group corresponding to the data is the first device group.

According to some embodiments of the present disclosure, if there is a dedicated transmission resource for the first device group between the core network element and the access network element, the sending unit sends the data to the access network element via the dedicated transmission resource.

According to some embodiments of the present disclosure, the device further includes:
an establishment unit configured to, if there is no dedicated transmission resource for the first device group between the core network element and the access network element, establish the dedicated transmission resource for the first device group between the core network element and the access network element; and
wherein the sending unit is configured to send the data to the access network element via the dedicated transmission resource.

According to some embodiments of the present disclosure, the establishment unit establishes the dedicated transmission resource for the first device group between the core network element and the access network element based on the group information of the first device group.

According to some embodiments of the present disclosure, the group information of the first device group includes at least one of PDU session information, QoS flow information, QoS information, core network address information, group identification information, IP tunnel, or GTP tunnel.

According to some embodiments of the present disclosure, if there is a common transmission resource between the core network element and the access network element, the sending unit sends the data to the access network element via the common transmission resource, wherein the data carries group identification information of the first device group, the data carries identification information of the terminal in the first device group and/or PDU session information of the terminal and/or QoS information of the terminal.

According to some embodiments of the present disclosure, if there is no dedicated transmission resource for the first device group between the core network element and the access network element, and there is a common transmission resource, the sending unit sends the data to the access network element via the common transmission resource.

An embodiment of the present disclosure provides a data transmission device, applied in an access network element, the device including:
a receiving unit configured to receive via a first transmission resource data sent from a core network element, wherein the data is data sent to a first device group; and
a sending unit configured to send the data to a terminal in the first device group via a second transmission resource;
wherein the data is transmitted on a control plane among the core network element, the access network element and the terminal.

According to some embodiments of the present disclosure, when the first transmission resource and/or the second transmission resource are dedicated transmission resources for the first device group, a resource attribute of the first transmission resource and/or the second transmission resource indicates that a device group corresponding to the data is the first device group.

According to some embodiments of the present disclosure, the first transmission resource and/or the second transmission resource have at least one of the following resource attributes: physical layer identification, logical channel, bearer, Quality of Service (QoS) flow, Protocol Data Unit (PDU) session, IP tunnel, or GPRS Tunneling Protocol (GTP) tunnel.

According to some embodiments of the present disclosure, when the first transmission resource and/or the second transmission resource are common transmission resources, group identification information of the first device group is carried when the data is transmitted to indicate that a device group corresponding to the data is the first device group, or identification information of the terminal in the first device group and/or Protocol Data Unit (PDU) session information of the terminal and/or Quality of Service (QoS) information of the terminal is carried when the data is transmitted to indicate that a device group corresponding to the data is the first device group.

According to some embodiments of the present disclosure, if there is a dedicated transmission resource for the first device group between the access network element and the terminal, the sending unit sends the data to the terminal in the first device group via the dedicated transmission resource.

According to some embodiments of the present disclosure, if there is a common transmission resource between the access network element and the terminal, the sending unit sends the data to the terminal in the first device group via the common transmission resource, wherein the data carries group identification information of the first device group, or the data carries identification information of the terminal in the first device group and/or Protocol Data Unit (PDU) session information of the terminal and/or Quality of Service (QoS) information of the terminal.

An embodiment of the present disclosure provides a data transmission device, applied in a terminal, the device including:
a receiving unit configured to receive via a second transmission resource data sent from an access network element, wherein the data is data sent to a first device group; and
a recognition unit configured to recognize that a device group corresponding to the data is the first device group;
wherein the data is transmitted on a control plane between the access network element and the terminal.

According to some embodiments of the present disclosure, when the second transmission resource is a dedicated transmission resource, the recognition unit recognizes that the device group corresponding to the data is the first device group based on a resource attribute of the second transmission resource.

According to some embodiments of the present disclosure, the second transmission resource has at least one of the following resource attributes: physical layer identification, logical channel, bearer, Quality of Service (QoS) flow, Protocol Data Unit (PDU) session, IP tunnel, or GPRS Tunneling Protocol (GTP) tunnel.

According to some embodiments of the present disclosure, if the second transmission resource is a common transmission resource, the recognition unit recognizes that the device group corresponding to the data is the first device group based on group identification information of the first device group carried in the data, or the recognition unit recognizes that the device group corresponding to the data is the first device group based on identification information of the terminal in the first device group and/or Protocol Data Unit (PDU) session information of the terminal and/or Quality of Service (QoS) information of the terminal carried in the data.

An embodiment of the present disclosure provides a computer storage medium having computer-executable instructions stored thereon; when the computer-executable instructions are executed by a processor, the processor is caused to implement the above data transmission methods.

In the technical solutions according to embodiments of the present disclosure, the core network element receives data sent from an external network, where the data is data sent to a first device group. The core network element sends the data to an access network element via a first transmission resource, so that the access network element sends the data to a terminal in the first device group via a second transmission resource. The data is transmitted on a control plane among the core network element, the access network element and the terminal. Using the technical solutions according to embodiments of the present disclosure, when a network needs to send data to a device group, the group data for the device group is transmitted on the control plane without sending data to each terminal in the device group, thereby avoiding waste of resources.

### BRIEF DESCRIPTION OF THE DRAWINGS

The drawings, which constitute a part of the present disclosure, are used to provide a further understanding of the present disclosure. The exemplary embodiments of the present disclosure and their descriptions are used to explain the present disclosure and are not intended to unduly limit the present disclosure.
FIG. 1 is a system architecture diagram of a 5G network according to an embodiment of the present disclosure.
FIG. 2 is a system architecture diagram of a 4G network according to an embodiment of the present disclosure.
FIG. 3 is a schematic flowchart of a data transmission method according to an embodiment of the present disclosure.
FIG. 4 is a schematic diagram of a user plane transmission path according to an embodiment of the present disclosure.
FIG. 5 is a schematic flowchart of a data transmission method according to an embodiment of the present disclosure.
FIG. 6 is a schematic flowchart of a data transmission method according to an embodiment of the present disclosure.
FIG. 7 is a schematic diagram of a data transmission device according to an embodiment of the present disclosure.
FIG. 8 is a schematic diagram of a data transmission device according to an embodiment of the present disclosure.
FIG. 9 is a schematic diagram of a data transmission device according to an embodiment of the present disclosure.
FIG. 10 is a schematic diagram of a computer device according to an embodiment of the present disclosure.

### DETAILED DESCRIPTION

In order to explain the features and technical contents of the embodiments of the present disclosure in more detail, the following describes the implementation of the embodiments of the present disclosure with reference to the accompanying drawings. The accompanying drawings are provided for showing some examples only and are not intended to limit the present disclosure.

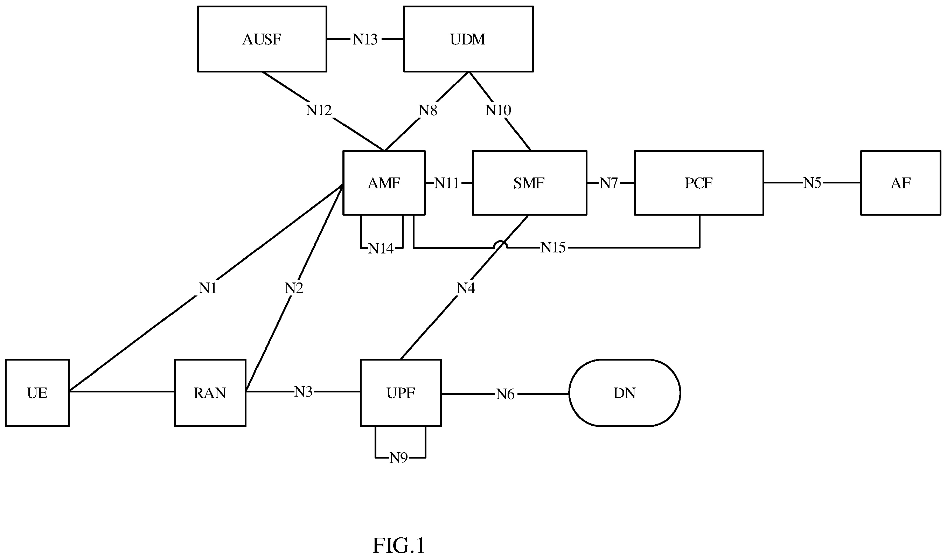

FIG. 1 is a system architecture diagram of a 5G network according to an embodiment of the present disclosure. As shown in FIG. 1, the devices involved in the 5G network system include:
a terminal (UE, User Equipment), a Radio Access Network, a User Plane Function (UPF), Data Network (DN), AMF, Core Access and Mobility Management Function (AMF), a Session Management Function (SMF), a Policy Control Function (PCF), an Application Function (AF), an Authentication Server Function (AUSF), Unified Data Management (UDM).

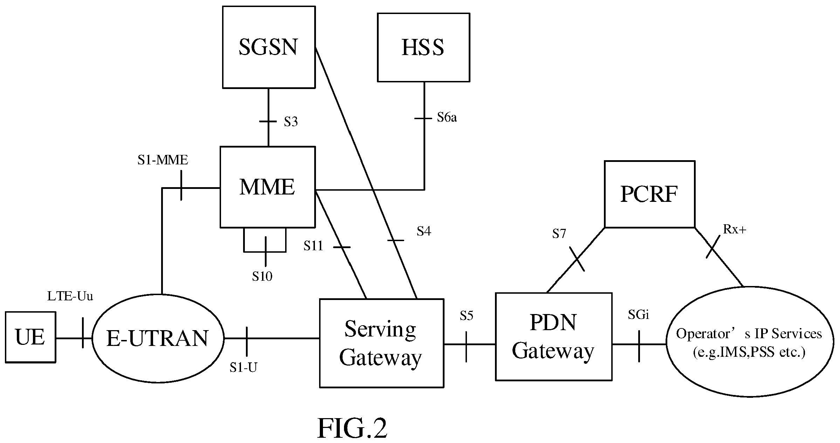

FIG. 2 is a system architecture diagram of a 4G network according to an embodiment of the present disclosure. As shown in FIG. 2, the devices involved in the 4G network system include:
a terminal (UE, User Equipment), an Evolved Universal Terrestrial Radio Access Network (E-UTRAN), a Mobility Management Function (MME) network element, a serving GPRS Support Node (SGSN), a Home Subscriber Server (HSS), a serving gateway, a Packet Data Network Gateway (PDN Gateway), a Policy and Charging Rules Functional (PCRF).

FIGS. 1 and 2 are only examples of a network architecture for implementing the embodiments of the present disclosure, and the embodiments of the present disclosure are not limited to the network structures described in FIGS. 1 and 2.

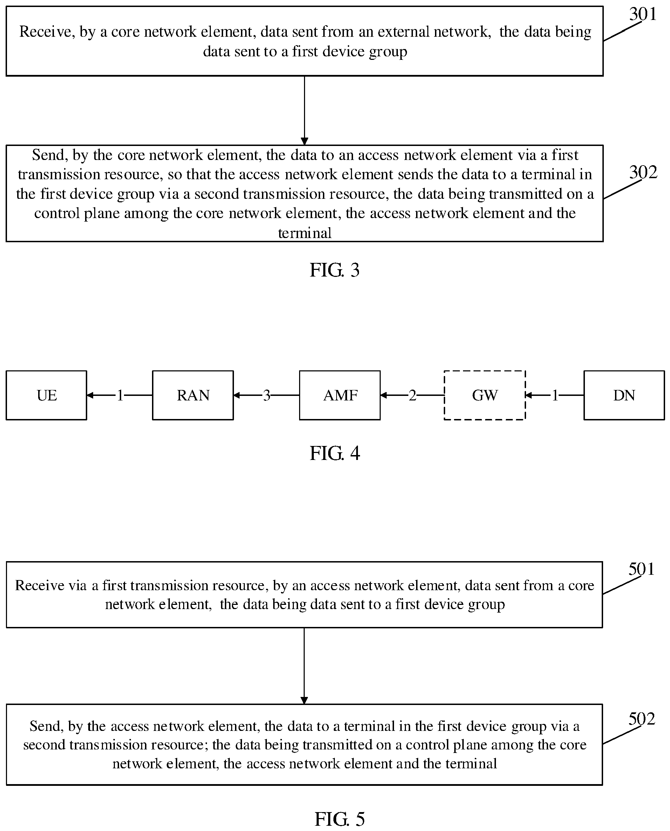

FIG. 3 is a flowchart of a data transmission method according to an embodiment of the present disclosure. As shown in FIG. 3, the data transmission method includes the following steps:

In step 301, a core network element receives data sent from an external network. The data is data sent to a first device group.

In embodiments of the present disclosure, the external network may be a DN, the core network element may be an AMF, and the access network element may be RAN. In addition, the first device may include one terminal, or two or more terminals.

In embodiments of the present disclosure, the core network element receives via a third transmission resource data sent from the external network. The third transmission resource is a dedicated transmission resource for the first device group.

In an embodiment, the data sent from the external network carries group identification information of the first device group; or identification information of the terminal in the first device group and/or PDU session information of the terminal and/or QoS information of the terminal.

Here, the device group corresponding to the data is indicated in the following manners:
1) a resource attribute of the third transmission resource is used to indicate that the device group corresponding to the data is the first device group; or,
2) the group identification information of the first device group carried in the data is used to indicate that the device group corresponding to the data is the first device group, or, identification information of the terminal in the first device group and/or the PDU session information of the terminal and/or the QoS information of the terminal carried in the data is used to indicate that the device group corresponding to the data is the first device group.

Embodiments of the present disclosure will be described below taking a 5G system as an example. As shown in FIG. 4, the downlink group data is transmitted to the terminal through the user plane path. Here, the group data refers to data sent to a group of devices.

Referring to steps 1 and 2 in FIG. 4, when there is data in the external network that needs to be sent to the first device group, DN sends the data to the AMF via the gateway (GW). The data can be sent through a specific group tunnel, for example, specific IP address, specific device address, specific GTP-U tunnel, etc. In an embodiment, the DN carries group identification information in the transmitted data. Here, GW is an optional physical device.

In step 302, the core network element sends the data to an access network element via a first transmission resource, so that the access network element sends the data to a terminal in the first device group via a second transmission resource. The data is transmitted on a control plane among the core network element, the access network element and the terminal

In embodiments of the present disclosure, when the first transmission resource and/or the second transmission resource are dedicated transmission resources for the first device group, a resource attribute of the first transmission resource and/or the second transmission resource indicates that a device group corresponding to the data is the first device group.

The first transmission resource and/or the second transmission resource have at least one of the following resource attributes: physical layer identification, logical channel, bearer, QoS flow, PDU session, IP tunnel, or GTP tunnel.

In embodiments of the present disclosure, when the first transmission resource and/or the second transmission resource are common transmission resources, group identification information of the first device group is carried when the data is transmitted so as to indicate that a device group corresponding to the data is the first device group, or identification information of the terminal in the first device group and/or PDU session information of the terminal and/or QoS information of the terminal is carried when the data is transmitted so as to indicate that a device group corresponding to the data is the first device group.

In embodiments of the present disclosure, the core network element encapsulates the group identification information of the first device group in a PDU of a target protocol layer corresponding to the terminal, and the PDU includes the data. In some other embodiments, the core network element encapsulates the identification information of the terminal in the first device group and/or the PDU session information of the terminal and/or the QoS information of the terminal in a PDU of a target protocol layer corresponding to the terminal, and the PDU includes the data.

Here, the target protocol layer is: NAS (Non-Access Stratum) layer, or AS (Access Stratum) layer.

In example implementations, AMF can encapsulate the group identification information in the peer-to-peer protocol layer (such as NAS layer) of AMF and UE. The RAN side does not need to identify the group identification information. When the UE receives the data unit of the AMF peer-to-peer protocol layer, the UE can identify the data belongs to which group.

In embodiments of the present disclosure, the core network element sending the data to the access network element via the first transmission resource may include the following situations:

In a first situation, if there is a dedicated transmission resource for the first device group between the core network element and the access network element, the core network element sends the data to the access network element via the dedicated transmission resource.

As shown in step 3 in FIG. 4, when the AMF receives group data from the external network, the AMF sends the data to the RAN. If there is a group-specific connection tunnel between the RAN and AMF, the AMF sends the data to the RAN on the group-specific connection tunnel.

In a second situation, if there is no dedicated transmission resource for the first device group between the core network element and the access network element, a dedicated transmission resource for the first device group is established between the core network element and the access network element. The core network element sends the data to the access network element via the dedicated transmission resource.

In an embodiment, the core network element establishes a dedicated transmission resource for the first device group between the core network element and the access network element based on the group information of the first device group.

The group information of the first device group includes at least one of the following: PDU session information, QoS flow information, QoS information, core network address information, group identification information, IP tunnel, and GTP tunnel.

As shown in step 3 of FIG. 4, if there is no group-specific connection tunnel between the RAN and the AMF, the AMF sends a group data transmission request message to the RAN, and the AMF establishes the group-specific connection tunnel with the RAN.

In a third situation, if there is a common transmission resource between the core network element and the access network element, the core network element sends the data to the access network element via the common transmission resource. The data carries group identification information of the first device group, or the data carries identification information of the terminal in the first device group and/or PDU session information of the terminal and/or QoS information of the terminal.

In an embodiment, if there is no dedicated transmission resource for the first device group between the core network element and the access network element, and there is a common transmission resource, the core network element sends the data to the access network element via the common transmission resource.

As shown in step 3 in FIG. 4, if there is no group-specific connection tunnel between the RAN and the AMF, the AMF sends data to the RAN via the common connection tunnel, and the AMF carries the group identification information when sending data to the RAN.

In an embodiment, the AMF encapsulates the data according to the protocol format between the RAN and the AMF. For example, the data can be encapsulated into NAS PDU.

FIG. 5 is a schematic flowchart of a data transmission method according to an embodiment of the present disclosure. As shown in FIG. 5, the data transmission method includes the following steps:

In step 501, the access network element receives via the first transmission resource the data sent from the core network element. The data is data sent to the first device group.

In embodiments of the present disclosure, the core network element may be AMF, and the access network element may be RAN.

In embodiments of the present disclosure, the transmission resource between the access network element and the core network element is called a first transmission resource, and the transmission resource between the access network element and the terminal is called a second transmission resource.

In embodiments of the present disclosure, when the first transmission resource and/or the second transmission resource are dedicated transmission resources for the first device group, a resource attribute of the first transmission resource and/or the second transmission resource indicates that a device group corresponding to the data is the first device group.

The first transmission resource and/or the second transmission resource have at least one of the following resource attributes: physical layer identification, logical channel, bearer, QoS flow, PDU session, IP tunnel, or GTP tunnel.

In embodiments of the present disclosure, when the first transmission resource and/or the second transmission resource are common transmission resources, group identification information of the first device group is carried when the data is transmitted so as to indicate that a device group corresponding to the data is the first device group; or, identification information of the terminal in the first device group and/or PDU session information of the terminal and/or QoS information of the terminal is carried when the data is transmitted so as to indicate that a device group corresponding to the data is the first device group.

In step 502, the access network element sends the data to the terminal in the first device group via the second transmission resource. The data is transmitted on a control plane among the core network element, the access network element and the terminal.

In embodiments of the present disclosure, depending on whether the second transmission resource is a dedicated transmission resource for the first device group, the following data transmission methods may be used:
1) If there is a dedicated transmission resource for the first device group between the access network element and the terminal, the access network element sends the data to the terminal in the first device group via the dedicated transmission resource.
2) If there is a common transmission resource between the access network element and the terminal, the access network element sends the data to the terminal in the first device group via the common transmission resource. The data carries group identification information of the first device group, or the data carries identification information of the terminal in the first device group and/or PDU session information of the terminal and/or QoS information of the terminal.

As shown in step 4 of FIG. 4, when the RAN receives the data sent from the AMF, the RAN encapsulates the data (such as NAS PDU) according to the protocol layer format between the RAN and the UE, for example, the data is encapsulated as RRC PDU. If there is a group-specific connection tunnel between the RAN and the UE, such as a dedicated physical resource, a dedicated physical layer identifier, a dedicated logical channel, a dedicated bearer, or a dedicated QoS flow, etc., the RAN will send the data to UE via the group-specific connection tunnel. If there is no group-specific connection channel between the RAN and the UE, the RAN carries the group identification information while sending data via the common connection tunnel.

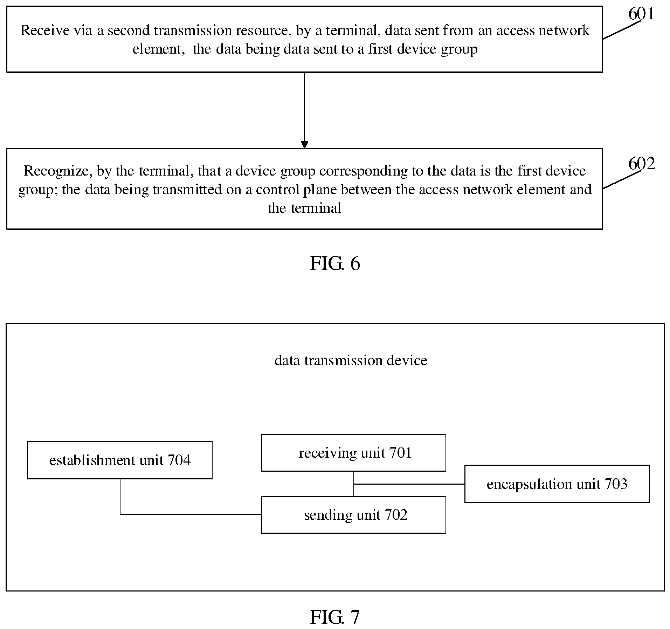

FIG. 6 is a schematic flowchart of a data transmission method according to an embodiment of the present disclosure. As shown in FIG. 6, the data transmission method includes the following steps:

In step 601, the terminal receives via the second transmission resource data sent from the access network element. The data is data sent to the first device group.

In step 602, the terminal recognizes that the device group corresponding to the data is the first device group. The data is transmitted on the control plane between the access network element and the terminal.

In embodiments of the present disclosure, the data is processed when the terminal belongs to the first device group, and the data is discarded when the terminal does not belong to the first device group.

In embodiments of the present disclosure, the terminal may identify that the device group corresponding to the data is the first device group using the following methods:

Method 1: When the second transmission resource is a dedicated transmission resource, the terminal recognizes that the device group corresponding to the data is the first device group based on the resource attribute of the second transmission resource.

The second transmission resource has at least one of the following resource attributes: physical layer identification, logical channel, bearer, QoS flow, PDU session, IP tunnel, or GTP tunnel.

Method 2: When the second transmission resource is a common transmission resource, the terminal recognizes that the device group corresponding to the data is the first device based on the group identification information of the first device group carried in the data; or, the terminal recognizes that the device group corresponding to the data is the first device based on identification information of the terminal in the first device group and/or the PDU session information of the terminal and/or the service quality information of the terminal carried in the data.

FIG. 7 is a schematic diagram of a data transmission device according to an embodiment of the present disclosure. The data transmission device in the embodiment is applied in a core network element. The device includes a receiving unit 701 and a sending unit 702.

The receiving unit 701 is configured to receive data sent from an external network. The data is data sent to a first device group.

The sending unit 702 is configured to send the data to an access network element via a first transmission resource, so that the access network element sends the data to a terminal in the first device group via a second transmission resource.

The data is transmitted on a control plane among the core network element, the access network element and the terminal.

According to embodiments of the present disclosure, when the first transmission resource and/or the second transmission resource are dedicated transmission resources for the first device group, a resource attribute of the first transmission resource and/or the second transmission resource indicates that a device group corresponding to the data is the first device group.

According to embodiments of the present disclosure, the first transmission resource and/or the second transmission resource have at least one of the following resource attributes: physical layer identification, logical channel, bearer, QoS flow, PDU session, IP tunnel, or GTP tunnel.

According to embodiments of the present disclosure, when the first transmission resource and/or the second transmission resource are common transmission resources, group identification information of the first device group is carried when the data is transmitted to indicate that a device group corresponding to the data is the first device group, or identification information of the terminal in the first device group and/or Protocol Data Unit (PDU) session information of the terminal and/or Quality of Service (QoS) information of the terminal is carried when the data is transmitted to indicate that a device group corresponding to the data is the first device group.

According to embodiments of the present disclosure, the device further includes:
an encapsulation unit 703 configured to encapsulate the group identification information of the first device group in a PDU of a target protocol layer corresponding to the terminal, wherein the PDU includes the data.

According to embodiments of the present disclosure, the device further includes:
an encapsulation unit 703 configured to encapsulate the identification information of the terminal in the first device group and/or the PDU session information of the terminal and/or the QoS information of the terminal in a PDU of a target protocol layer corresponding to the terminal, wherein the PDU includes the data.

According to embodiments of the present disclosure, the target protocol layer is: NAS layer, or AS layer.

According to embodiments of the present disclosure, the receiving unit 701 is configured to:
receive via a third transmission resource data sent from the external network, wherein the third transmission resource is a dedicated transmission resource for the first device group.

According to embodiments of the present disclosure, the data sent from the external network carries:
group identification information of the first device group; or
identification information of the terminal in the first device group and/or PDU session information of the terminal and/or QoS information of the terminal.

According to embodiments of the present disclosure, a resource attribute of the third transmission resource is used to indicate that the device group corresponding to the data is the first device group; or,
the group identification information of the first device group carried in the data is used to indicate that the device group corresponding to the data is the first device group, or, identification information of the terminal in the first device group and/or the PDU session information of the terminal and/or the QoS information of the terminal carried in the data is used to indicate that the device group corresponding to the data is the first device group.

According to embodiments of the present disclosure, if there is a dedicated transmission resource for the first device group between the core network element and the access network element, the sending unit 702 sends the data to the access network element via the dedicated transmission resource.

According to embodiments of the present disclosure, the device further includes:
an establishment unit 704 configured to, if there is no dedicated transmission resource for the first device group between the core network element and the access network element, establish the dedicated transmission resource for the first device group between the core network element and the access network element; and
the sending unit 702 is configured to send the data to the access network element via the dedicated transmission resource.

According to embodiments of the present disclosure, the establishment unit 704 establishes the dedicated transmission resource for the first device group between the core network element and the access network element based on the group information of the first device group.

According to embodiments of the present disclosure, the group information of the first device group includes at least one of PDU session information, QoS flow information, QoS information, core network address information, group identification information, IP tunnel, or GTP tunnel.

According to embodiments of the present disclosure, if there is a common transmission resource between the core network element and the access network element, the sending unit 702 sends the data to the access network element via the common transmission resource, wherein the data carries group identification information of the first device group, the data carries identification information of the terminal in the first device group and/or PDU session information of the terminal and/or QoS information of the terminal.

According to embodiments of the present disclosure, if there is no dedicated transmission resource for the first device group between the core network element and the access network element, and there is a common transmission resource, the sending unit 702 sends the data to the access network element via the common transmission resource.

The functions implemented by the units in the data transmission device shown in FIG. 7 can be found in the related description of embodiments of the foregoing data transmission methods. The functions of units in the data transmission device shown in FIG. 7 can be realized by a program running on a processor, or by a specific logic circuit.

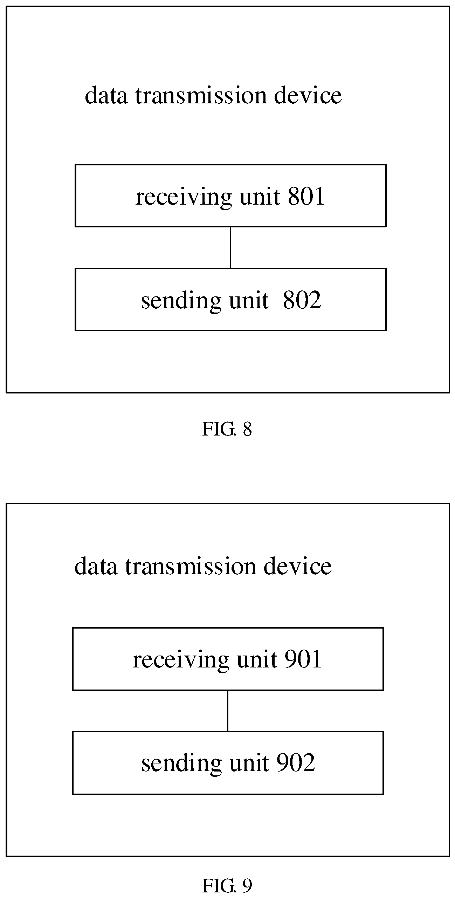

FIG. 8 is a schematic diagram of a data transmission device according to an embodiment of the present disclosure. The data transmission device in the embodiment is applied in an access network element. The device includes a receiving unit 801 and a sending unit 802.

The receiving unit 801 is configured to receive via a first transmission resource data sent from a core network element. The data is data sent to a first device group.

The sending unit 802 is configured to send the data to a terminal in the first device group via a second transmission resource.

The data is transmitted on a control plane among the core network element, the access network element and the terminal.

According to embodiments of the present disclosure, when the first transmission resource and/or the second transmission resource are dedicated transmission resources for the first device group, a resource attribute of the first transmission resource and/or the second transmission resource indicates that a device group corresponding to the data is the first device group.

According to embodiments of the present disclosure, the first transmission resource and/or the second transmission resource have at least one of the following resource attributes: physical layer identification, logical channel, bearer, QoS flow, PDU session, IP tunnel, or GTP tunnel.

According to embodiments of the present disclosure, when the first transmission resource and/or the second transmission resource are common transmission resources, group identification information of the first device group is carried when the data is transmitted to indicate that a device group corresponding to the data is the first device group, or identification information of the terminal in the first device group and/or PDU session information of the terminal and/or QoS information of the terminal is carried when the data is transmitted to indicate that a device group corresponding to the data is the first device group.

According to embodiments of the present disclosure, if there is a dedicated transmission resource for the first device group between the access network element and the terminal, the sending unit 802 sends the data to the terminal in the first device group via the dedicated transmission resource.

According to embodiments of the present disclosure, if there is a common transmission resource between the access network element and the terminal, the sending unit 802 sends the data to the terminal in the first device group via the common transmission resource, wherein the data carries group identification information of the first device group, or the data carries identification information of the terminal in the first device group and/or PDU session information of the terminal and/or QoS information of the terminal.

The functions implemented by the units in the data transmission device shown in FIG. 8 can be found in the related description of embodiments of the foregoing data transmission methods. The functions of units in the data transmission device shown in FIG. 8 can be realized by a program running on a processor, or by a specific logic circuit.

FIG. 9 is a schematic diagram of a data transmission device according to an embodiment of the present disclosure. The data transmission device is applied in a terminal. The device includes a receiving unit 901 and a recognition unit 902.

The receiving unit 901 is configured to receive via a second transmission resource data sent from an access network element. The data is data sent to a first device group.

The recognition unit 902 is configured to recognize that a device group corresponding to the data is the first device group.

The data is transmitted on a control plane between the access network element and the terminal.

According to embodiments of the present disclosure, when the second transmission resource is a dedicated transmission resource, the recognition unit 902 recognizes that the device group corresponding to the data is the first device group based on a resource attribute of the second transmission resource.

According to embodiments of the present disclosure, the second transmission resource has at least one of the following resource attributes: physical layer identification, logical channel, bearer, Quality of Service (QoS) flow, Protocol Data Unit (PDU) session, IP tunnel, or GPRS Tunneling Protocol (GTP) tunnel.

According to embodiments of the present disclosure, if the second transmission resource is a common transmission resource, the recognition unit 902 recognizes that the device group corresponding to the data is the first device group based on group identification information of the first device group carried in the data, or the recognition unit recognizes that the device group corresponding to the data is the first device group based on identification information of the terminal in the first device group and/or Protocol Data Unit (PDU) session information of the terminal and/or Quality of Service (QoS) information of the terminal carried in the data.

The functions implemented by the units in the data transmission device shown in FIG. 9 can be found in the related description of embodiments of the foregoing data transmission methods. The functions of units in the data transmission device shown in FIG. 9 can be realized by a program running on a processor, or by a specific logic circuit.

In embodiments of the present disclosure, if the data transmission device is implemented in the form of a software functional module and sold or used as an independent product, it may also be stored in a computer-readable storage medium. Based on such an understanding, the technical solutions of the embodiments of the present disclosure that are essential or contribute to the existing technologies can be embodied in the form of software products. The computer software product is stored in a storage medium and includes several instructions to cause a computer device (which may be a personal computer, a server, or a network device) to perform all or part of the methods described in the embodiments of the present disclosure. The storage medium includes various mediums that can store program codes, such as a U disk, a mobile hard disk, a read only memory (ROM), a magnetic disk, or an optical disk. In this way, the embodiments of the present disclosure are not limited to any specific combination of hardware and software.

An embodiment of the present disclosure further provides a computer storage medium in which computer-executable instructions are stored. When the computer-executable instructions are executed by a processor, the processor is caused to implement the data transmission methods according to embodiments of the present disclosure.

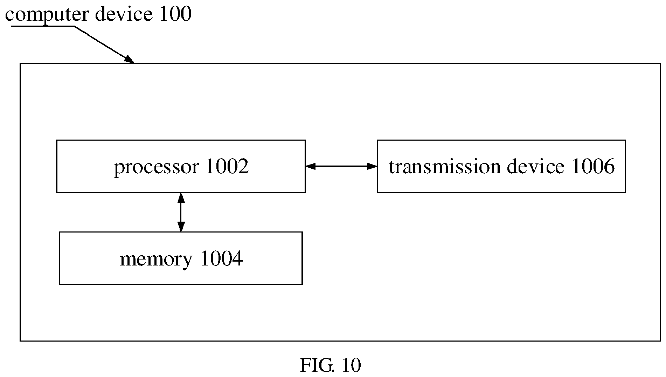

FIG. 10 is a schematic structural diagram of a computer device according to an embodiment of the present disclosure. The computer device may be a terminal or a network device. As shown in FIG. 10, the computer device 100 may include one or more (only one shown in the figure) processors 1002, a memory 1004 for storing data, and a transmission device 1006 for performing a communication function. The processors 1002 may include but are not limited to a microprocessor (MCU, Micro Controller Unit) or a programmable logic device (FPGA, Field Programmable Gate Array). A person of ordinary skill in the art can understand that the structure shown in FIG. 10 is only schematic, and it does not limit the structure of the electronic device. For example, the computer device 100 may also include more or fewer components than those shown in FIG. 10, or have a different configuration from that shown in FIG. 10.

The memory 1004 may be used to store software programs and modules of application software, such as program instructions/modules corresponding to the methods in the embodiments of the present disclosure. The one or more processors 1002 implement various functional applications and data processing by running the software programs and modules stored in the memory 1004, i.e., to implement the methods described above. The memory 1004 may include a high-speed random access memory, and may further include a non-volatile memory, such as one or more magnetic storage devices, flash memory, or other non-volatile solid-state memory. In some examples, the memory 1004 may further include memories remotely set with respect to the processor 1002, and these remote memories may be connected to the computer device 100 through a network. Examples of the above network include, but are not limited to, the Internet, an intranet, a local area network, a mobile communication network, and any combinations thereof.

The transmission device 1006 is used for receiving or transmitting data via a network. The examples of the network may include a wireless network provided by a communication provider of the computer device 100. In one example, the transmission device 1006 includes a network adapter (NIC, Network Interface Controller), which can be connected to other network devices through a base station so as to communicate with the Internet. In one example, the transmission device 1006 may be a radio frequency (RF) module, which is used to communicate with the Internet in a wireless manner.

The technical solutions described in the embodiments of the present disclosure can be arbitrarily combined if such combination will not result in conflict.

In the embodiments provided by the present disclosure, it should be understood that the disclosed methods and smart devices may be implemented in other ways. The device embodiments described above are only schematic. For example, the division of the units is only a logical function division. In actual implementations, there may be another division manner, such as multiple units or components may be combined, or can be integrated into another system, or some features can be ignored or not implemented. In addition, the coupling, direct coupling, or communication connection between the shown or discussed components may be realized through some interfaces. The indirect coupling or communication connection of the devices or units may be electrical, mechanical, or in other forms.

The units described above as separate components may or may not be physically separated, and the components shown as units may or may not be physical units, which may be located in one place or distributed over multiple network units. Some or all of the units may be selected according to actual needs to achieve the objectives of the solutions of the embodiments.

In addition, functional units in embodiments of the present disclosure may be integrated into a second processing unit, or each unit may be separately used as a unit, or two or more units may be integrated into one unit. The above integrated unit may be implemented in the form of hardware, or in the form of hardware plus software functional units.

The aforementioned embodiments are meant to be examples useful for understanding the invention, which is only defined by the appended claims.

## Claims

1. A data transmission method, comprising:
receiving (301), by a core network element, data sent from an external network, wherein the data is data sent to a first device group; and
sending (302), by the core network element, the data to an access network element via a first transmission resource, so that the access network element sends the data to a terminal in the first device group via a second transmission resource;
wherein the data is transmitted on a control plane among the core network element, the access network element and the terminal;
wherein sending, by the core network element, the data to an access network element via a first transmission resource, comprises:
if there is a dedicated transmission resource for the first device group between the core network element and the access network element, sending, by the core network element, the data to the access network element via the dedicated transmission resource;
if there is no dedicated transmission resource for the first device group between the core network element and the access network element, establishing, by the core network element, the dedicated transmission resource for the first device group between the core network element and the access network element; and
sending, by the core network element, the data to the access network element via the dedicated transmission resource;
wherein establishing, by the core network element, the dedicated transmission resource for the first device group between the core network element and the access network element, comprises:
establishing, by the core network element, the dedicated transmission resource for the first device group between the core network element and the access network element based on group information of the first device group.

2. The method according to claim 1, wherein when the first transmission resource and/or the second transmission resource are dedicated transmission resources for the first device group, a resource attribute of the first transmission resource and/or the second transmission resource indicates that a device group corresponding to the data is the first device group.

3. The method according to claim 2, wherein the first transmission resource and/or the second transmission resource have at least one of the following resource attributes: physical layer identification, logical channel, bearer, Quality of Service, QoS, flow, Protocol Data Unit, PDU, session, IP tunnel, or GPRS Tunneling Protocol, GTP, tunnel.

4. The method according to claim 1, wherein when the first transmission resource and/or the second transmission resource are common transmission resources, group identification information of the first device group is carried when the data is transmitted to indicate that a device group corresponding to the data is the first device group, or identification information of the terminal in the first device group and/or Protocol Data Unit, PDU, session information of the terminal and/or Quality of Service, QoS, information of the terminal is carried when the data is transmitted to indicate that a device group corresponding to the data is the first device group.

5. The method according to claim 4, wherein indicating that a device group corresponding to the data is the first device group by carrying group identification information of the first device group when transmitting the data, comprises:
encapsulating, by the core network element, the group identification information of the first device group in a PDU of a target protocol layer corresponding to the terminal, wherein the PDU comprises the data.

6. The method according to claim 4, wherein indicating that a device group corresponding to the data is the first device group by carrying identification information of the terminal in the first device group and/or PDU session information of the terminal and/or QoS information of the terminal when transmitting the data, comprises:
encapsulating, by the core network element, the identification information of the terminal in the first device group and/or the PDU session information of the terminal and/or the QoS information of the terminal in a PDU of a target protocol layer corresponding to the terminal, wherein the PDU comprises the data.

7. The method according to claim 1, wherein the group information of the first device group comprises at least one of PDU session information, QoS flow information, QoS information, core network address information, group identification information, IP tunnel, or GTP tunnel.

8. A data transmission device, for use in a core network element, the device being configured to perform the method according to any one of claims 1 to 7.

## Patentansprüche

1. Datenübertragungsverfahren, das Folgendes umfasst:
Empfangen (301) von Daten, die von einem externen Netz gesendet werden, durch ein Netzkernelement, wobei die Daten Daten sind, die an eine erste Vorrichtungsgruppe gesendet werden; und
Senden (302) der Daten durch das Netzkernelement über ein erstes Übertragungsbetriebsmittel an ein Netzzugangselement, derart, dass das Netzzugangselement die Daten über ein zweites Übertragungsbetriebsmittel an ein Endgerät in der ersten Vorrichtungsgruppe sendet;
wobei die Daten auf einer Steuerebene zwischen dem Netzkernelement, dem Netzzugangselement und dem Endgerät übertragen werden;
wobei das Senden der Daten durch das Netzkernelement über ein erstes Übertragungsbetriebsmittel an ein Netzzugangselement Folgendes umfasst:
dann, wenn ein speziell dafür vorgesehenes Übertragungsbetriebsmittel für die erste Vorrichtungsgruppe zwischen dem Netzkernelement und dem Netzzugangselement vorhanden ist, Senden der Daten durch das Netzkernelement über das speziell dafür vorgesehene Übertragungsbetriebsmittel an das Netzzugangselement;
dann, wenn kein speziell dafür vorgesehenes Übertragungsbetriebsmittel für die erste Vorrichtungsgruppe zwischen dem Netzkernelement und dem Netzzugangselement vorhanden ist, Einrichten des speziell dafür vorgesehenen Übertragungsbetriebsmittels für die erste Vorrichtungsgruppe zwischen dem Netzkernelement und dem Netzzugangselement durch das Netzkernelement; und
Senden der Daten durch das Netzkernelement über das speziell zugewiesene Übertragungsbetriebsmittel an das Netzzugangselement;
wobei das Einrichten des speziell dafür vorgesehenen Übertragungsbetriebsmittels für die erste Vorrichtungsgruppe zwischen dem Netzkernelement und dem Netzzugangselement durch das Netzkernelement Folgendes umfasst:
Einrichten des speziell dafür vorgesehenen Übertragungsbetriebsmittels für die erste Vorrichtungsgruppe zwischen dem Netzkernelement und dem Netzzugangselement durch das Netzkernelement auf der Grundlage von Gruppeninformationen der ersten Vorrichtungsgruppe.

2. Verfahren nach Anspruch 1, wobei dann, wenn das erste Übertragungsbetriebsmittel und/oder das zweite Übertragungsbetriebsmitte speziell dafür vorgesehene Übertragungsbetriebsmittel für die erste Vorrichtungsgruppe sind, ein Betriebsmittelattribut des ersten Übertragungsbetriebsmittels und/oder des zweiten Übertragungsbetriebsmittels angibt, dass eine Vorrichtungsgruppe, die den Daten entspricht, die erste Vorrichtungsgruppe ist.

3. Verfahren nach Anspruch 2, wobei das erste Übertragungsbetriebsmittel und/oder das zweite Übertragungsbetriebsmittel mindestens eines der folgenden Betriebsmittelattribute aufweisen: Kennung der physikalischen Schicht, logischer Kanal, Träger, Dienstgütestrom, QoS-Strom, Protokolldateneinheitssitzung, PDU-Sitzung, IP-Tunnel oder GPRS-Tunnelprotokoll-Tunnel, GTP-Tunnel.

4. Verfahren nach Anspruch 1, wobei dann, wenn das erste Übertragungsbetriebsmittel und/oder das zweite Übertragungsbetriebsmittel gemeinsame Übertragungsbetriebsmittel sind, Gruppenkennungsinformationen der ersten Vorrichtungsgruppe geführt werden, wenn die Daten übertragen werden, um anzugeben, dass eine Vorrichtungsgruppe, die den Daten entspricht, die erste Vorrichtungsgruppe ist, oder Kennungsinformationen des Endgeräts in der ersten Vorrichtungsgruppe und/oder Protokolldateneinheits-Sitzungsinformationen, PDU-Sitzungsinformationen des Endgeräts und/oder Dienstgüteinformationen, QoS-Informationen des Endgeräts geführt werden, wenn die Daten übertragen werden, um anzugeben, dass eine Vorrichtungsgruppe, die den Daten entspricht, die erste Vorrichtungsgruppe ist.

5. Verfahren nach Anspruch 4, wobei das Angeben, dass eine Vorrichtungsgruppe, die den Daten entspricht, die erste Vorrichtungsgruppe ist, durch Führen von Gruppenkennungsinformationen der ersten Vorrichtungsgruppe, wenn die Daten übertragen werden, Folgendes umfasst:
Einschließen der Gruppenkennungsinformationen der ersten Vorrichtungsgruppe in einer PDU einer Zielprotokollschicht, die dem Endgerät entspricht, durch das Netzkernelement, wobei die PDU die Daten umfasst.

6. Verfahren nach Anspruch 4, wobei das Angeben, dass eine Vorrichtungsgruppe, die den Daten entspricht, die erste Vorrichtungsgruppe ist, durch Führen von Kennungsinformationen des Endgeräts in der ersten Vorrichtungsgruppe und/oder PDU-Sitzungsinformationen des Endgeräts und/oder QoS-Informationen des Endgeräts, wenn die Daten übertragen werden, Folgendes umfasst:
Einschließen der Kennungsinformationen des Endgeräts in der ersten Vorrichtungsgruppe und/oder der PDU-Sitzungsinformationen des Endgeräts und/oder der QoS-Informationen des Endgeräts in einer PDU einer Zielprotokollschicht, die dem Endgerät entspricht, durch das Netzkernelement, wobei die PDU die Daten umfasst.

7. Verfahren nach Anspruch 1, wobei die Gruppeninformationen der ersten Vorrichtungsgruppe PDU-Sitzungsinformationen und/oder QoS-Strominformationen und/oder QoS-Informationen und/oder Netzkernadresseninformationen und/oder Gruppenkennungsinformationen und/oder IP-Tunnelinformationen und/oder GTP-Tunnelinformationen umfassen.

8. Datenübertragungsvorrichtung zur Verwendung in einem Netzkernelement, wobei die Vorrichtung konfiguriert ist, das Verfahren nach einem der Ansprüche 1 bis 7 durchzuführen.

## Revendications

1. Procédé de transmission de données, comprenant :
la réception (301), par un élément de réseau central, de données envoyées par un réseau externe, dans lequel les données sont des données envoyées à un premier groupe de dispositifs ; et
l'envoi (302), par l'élément de réseau central, des données à un élément de réseau d'accès par l'intermédiaire d'une première ressource de transmission, de sorte que l'élément de réseau d'accès envoie les données à un terminal dans le premier groupe de dispositifs par l'intermédiaire d'une seconde ressource de transmission ;
dans lequel les données sont transmises sur un plan de commande entre l'élément de réseau central, l'élément de réseau d'accès et le terminal ;
dans lequel l'envoi, par l'élément de réseau central, des données à un élément de réseau d'accès par l'intermédiaire d'une première ressource de transmission, comprend :
s'il y a une ressource de transmission dédiée pour le premier groupe de dispositifs entre l'élément de réseau central et l'élément de réseau d'accès, l'envoi, par l'élément de réseau central, des données à l'élément de réseau d'accès par l'intermédiaire de la ressource de transmission dédiée ;
s'il n'y a pas de ressource de transmission dédiée pour le premier groupe de dispositifs entre l'élément de réseau central et l'élément de réseau d'accès, l'établissement, par l'élément de réseau central, de la ressource de transmission dédiée pour le premier groupe de dispositifs entre l'élément de réseau central et l'élément de réseau d'accès ; et
l'envoi, par l'élément de réseau central, des données à l'élément de réseau d'accès par l'intermédiaire de la ressource de transmission dédiée ;
dans lequel l'établissement, par l'élément de réseau central, de la ressource de transmission dédiée pour le premier groupe de dispositifs entre l'élément de réseau central et l'élément de réseau d'accès, comprend :
l'établissement, par l'élément de réseau central, de la ressource de transmission dédiée pour le premier groupe de dispositifs entre l'élément de réseau central et l'élément de réseau d'accès sur la base d'informations de groupe du premier groupe de dispositifs.

2. Procédé selon la revendication 1, dans lequel, lorsque la première ressource de transmission et/ou la seconde ressource de transmission sont des ressources de transmission dédiées pour le premier groupe de dispositifs, un attribut de ressource de la première ressource de transmission et/ou de la seconde ressource de transmission indique qu'un groupe de dispositifs correspondant aux données est le premier groupe de dispositifs.

3. Procédé selon la revendication 2, dans lequel la première ressource de transmission et/ou la seconde ressource de transmission ont au moins l'un des attributs de ressource suivants : identification de couche physique, canal logique, support, flux de Qualité de Service, QoS, session d'Unité de Données de Protocole, PDU, tunnel IP, ou tunnel de Protocol de Tunnel GPRS, GTP.

4. Procédé selon la revendication 1, dans lequel, lorsque la première ressource de transmission et/ou la seconde ressource de transmission sont des ressources de transmission communes, des informations d'identification de groupe du premier groupe de dispositifs sont transportées lorsque les données sont transmises pour indiquer qu'un groupe de dispositifs correspondant aux données est le premier groupe de dispositifs, ou des informations d'identification du terminal dans le premier groupe de dispositifs et/ou des informations de session d'Unité de Données de Protocole, PDU, du terminal et/ou des informations de Qualité de Service, QoS, du terminal sont transportées lorsque les données sont transmises pour indiquer qu'un groupe de dispositifs correspondant aux données est le premier groupe de dispositifs.

5. Procédé selon la revendication 4, dans lequel l'indication qu'un groupe de dispositifs correspondant aux données est le premier groupe de dispositifs par le transport d'informations d'identification de groupe du premier groupe de dispositifs lors de la transmission des données, comprend : l'encapsulation, par l'élément de réseau central, des informations d'identification de groupe du premier groupe de dispositifs dans une PDU d'une couche de protocole cible correspondant au terminal, dans lequel la PDU comprend les données.

6. Procédé selon la revendication 4, dans lequel l'indication du fait qu'un groupe de dispositifs correspondant aux données est le premier groupe de dispositifs par le transport d'informations d'identification du terminal dans le premier groupe de dispositifs et/ou d'informations de session de PDU du terminal et/ou d'informations de QoS du terminal lors de la transmission des données, comprend :
l'encapsulation, par l'élément de réseau central, des informations d'identification du terminal dans le premier groupe de dispositifs et/ou des informations de session de PDU du terminal et/ou des informations de QoS du terminal dans une PDU d'une couche de protocole cible correspondant au terminal, dans lequel la PDU comprend les données.

7. Procédé selon la revendication 1, dans lequel les informations de groupe du premier groupe de dispositifs comprennent au moins l'une d'informations de session de PDU, d'informations de flux de QoS, d'informations de QoS, d'informations d'adresse de réseau central, d'informations d'identification de groupe, de tunnel IP ou de tunnel GTP.

8. Dispositif de transmission de données, destiné à être utilisé dans un élément de réseau central, le dispositif étant configuré pour mettre en œuvre le procédé selon l'une quelconque des revendications 1 à 7.
